# EUROPEAN PATENT APPLICATION

(11) **EP 1 760 988 A1**
(43) Date of publication of application: **07.03.2007**
(21) Application number: 06300755.3
(22) Date of filing: 04.07.2006
(51) Int. Cl.: H04L 29/06

(54) **Multi-level and multi-factor security credentials management for network element authentication**

(30) Priority: 08.07.2005 US 176383
(71) Applicant: Alcatel, 75008 Paris (FR)
(72) Inventor: Marquet, Bertrand, Ottawa Ontario K1H 1B4 (CA); Cosquer, François J.N., Kanata Ontario K2T 1G5 (CA)
(74) Representative: Hervouet, Sylvie

(57) **Abstract**

A secured execution device (SED) maintains security credentials for a certain user that requests access to the network for performing specified operations or for obtaining specified information. The NE from where the user requests access to the network is authenticated using SED credentials against a multi-level and multi-factor credentials table maintained by a NE authentication controller provided in the EMS/NM/OSS controlling the respective NE. The NE authentication controller issues a challenge and transmits it to the NE . The SED receives the challenge and both the SED and the NE authentication controller process the random number in the same way. The SED then returns a one time usage cryptographic message with the response to the challenge. The NE authentication controller checks the SED response against the expected response calculated locally; the user gains access to the network over the NE if the two responses coincide.

## Description

### Cross-referenced Applications

This application is related to US Patent Application SN: 10/846,542 (Marquet et al.), filed on May 17, 2004 and entitled "Network Equipment With Embedded Movable Secure Devices", which is incorporated herein by reference.

### Field of the invention

The invention is directed to communication networks and in particular to a multi-level and multi-factor security credentials management system and method for network element (NE) authentication.

### Background of the Invention

As the communication networks expand and converge into an integrated global system, open protocol standards are being developed and adopted with a view to enable flexibility and universality of access to collection and exchange of information. Unfortunately, these open standards tend to make networks more vulnerable to security related attacks, whereby an attacker can potentially gain access to sensitive and confidential information at targeted network elements.

In telecommunication networks, both the users and the network operator have to be protected against undesirable intrusion of third parties, as far as possible. Security is a critical feature in modern communication systems; communications within networks must be kept secure at all times and in all places to avoid sharing of confidential information. In addition to providing strong protection, security systems also need to be flexible, promoting inter-operability and collaboration across domains of administration.

One major aspects of the network security is protection of the information that the network manipulates and stores, which is currently accomplished using various forms of encryption based on secret keys exchange. Access rights are assigned in terms of the ability to send and/or receive information via the transmission medium. An equally important aspect of the network security is authentication and access control of the users. Authentication mechanisms attempt to ensure that information comes from the source it is claimed to come from, and is typically based on user IDs and passwords.

TCP (transmission control protocol), which is the original Internet protocol, was designed on the basis that system users would connect to the network for strictly legitimate purposes, so that no particular consideration was given to security issues. Many routing protocols relay on TCP; for example, BGP (border gateway protocol) uses TCP as its transport protocol, which makes it vulnerable to all security weaknesses of the TCP protocol itself. For a determined attacker, it is possible to forcibly close a BGP session or even hijack it and insert malicious routing information into the BGP data stream. Running BGP over IPsec would protect it against attacks on the TCP stream, but in practice sauch configurations are not deployed widely. Instead, the TCP MD5 (message digest) option described in RFC 2385 is used more often, since support for this protocol option is available on most BGP implementations. The MD5 algorithm is intended for digital signature applications, where a large file must be "compressed" in a secure manner before being encrypted with a private (secret) key under a public-key cryptosystem such as RSA.

The majority of the issues related to information protection within the network exist because operations and control are currently made with weak authentication of the network element (NE), or with no authentication at all. To achieve stronger security in today's open environment, the network elements need more secure management and control mechanisms, including support for functions such as operator and device authentication, configuration sealing, cryptographic support, etc. Implementing a strong authentication of the NEs requires a secure mechanism for management of network users secret credentials. A generic mechanism for manipulating the security credentials for all users having access to the network, while maintaining these inaccessible to unauthorized users is vital to the proper execution of a service by a network element.

Current solutions provide software means for managing security credentials of each NE and storage means for storing the specific operational capabilities of the NE and the credentials for accessing and using these NE capabilities. Access to a file with credentials is in most cases protected and limited to the administrator account of the NE. The consequence of this type of implementation is that any attack on one piece of vulnerable software can potentially allow access to sensitive and confidential data on the network elements, as all applications, including applications which manipulate sensitive and confidential data, share the same execution context. For example, the credentials may be compromised using root account vulnerabilities of the operating system of the NE, or a misconfiguration of an open port. Unfortunately, it is very possible that such a scenario remains undetected by the network management systems until some anomalies detection system alerts the network operator. As a result, this current approach used for implementing security credentials management and control can be easily bypassed.

It is also known to use smartcard technologies for a secure storage of the credentials. These cards have the appearance of a standard credit card but incorporate circuitry for on-board storage and exchange of stored data with a reader installed on the NE, via an input-output interface. Access to this data is based on passwords and user IDs and the data transmission uses encryption. Thus, the smartcards function currently more as a means of storing data, and do not play a role in authenticating the host NE.

In principle, sensitive and confidential data should not be accessible outside the context of the application for better security. The current credential management systems provide no access restriction to sensitive confidential data for users with different roles, such as the manufacturer and the operator, each of which have their own set of specific security information. This vulnerability is inherent with systems using classical memories and storage that do not allow isolation and access restriction to sensitive confidential data.

There is a need for a stronger and better security credentials management method and system for verifying authenticity of a network element in a communication network.

### Summary of the Invention

It is an object of the invention to provide multi -level and multi-factor security credentials management for network element authentication.

Accordingly, the invention provides a security credentials management system for verifying authenticity of a network element (NE) in a communication network, comprising: a NE authentication unit for generating a challenge to said network element and verifying if a response received from said NE to said challenge conforms with an expected response; an autonomous secured execution device (SED) for generating said response to said challenge based on security credentials for a specified user, upon temporary connection with said NE; and a NE security controller for enabling communication between said NE authentication unit and said SED.

The invention is also directed to method for managing security credentials of the users of a communication network, for verifying authenticity of a network element (NE) in a communication network comprising: a) providing a secured execution device (SED) with security credentials of a specified entity and re-movably connecting said SED to said NE for login a request to perform a specified operation from sad NE; b) at said NE, detecting the presence of said SED and informing a NE control entity of said request; c) at said NE control entity, generating a challenge to said SED and transmitting said challenge to said SED; d) processing said challenge at said SED, and transmitting a SED response to said NE control entity; e) at said NE control entity, verifying if said response conforms with an expected response calculated locally at said NE control entity; and f) authorizing said entity to perform said operation from said NE if said response coincides with said expected response.

Advantageously, the method and system of the invention makes it difficult for an unauthorized entity to forge an authentication message, as protected network information is not accessible without correct credentials, to the extent that even the NE software has no access to the credentials.

Another advantage of the invention is that it enables distribution of privileges in such a way that at any time, no one alone, has the ability to control the equipment protected by security credentials management system of the invention.

### Brief Description of the drawings

The foregoing and other objects, features and advantages of the invention will be apparent from the following more particular description of the preferred embodiments, as illustrated in the appended drawings, where:
**Figure 1** shows a block diagram of the multi-level and multi-factor security credentials management system for network element authentication according to the invention;
**Figure 2** shows an example of security credentials table for two levels of access and two factors; and
**Figure 3** shows an exemplary scenario of the multi-level multi-factor credentials management system according to the invention.

### Detailed Description

Credentials in the context of the invention refers to secret information that enables an entity to access a service/information of interest. For example, the entity identification (e.g. operator name, password or PIN), the IP addresses of network elements of interest, CPSS (control packet switching system) addresses, a secret key, etc. The term "protected data" refers to files and programs that an operator, manufacturer or user (an entity) wishes to maintain secret. The term "privilege" refers to a special right or a special benefit granted to a certain entity, which allows the network element to divulge confidential information to that entity or to perform a certain operation requested by the respective entity. Examples of privileges are access (read, write or both) privileges to a respective network resource, type of information that the accessing entity is allowed to access (i.e. individual financial information in a financial database) and information flow restrictions/allowances.

This specification also uses the term "factor" for the level of security granted to a certain entity.

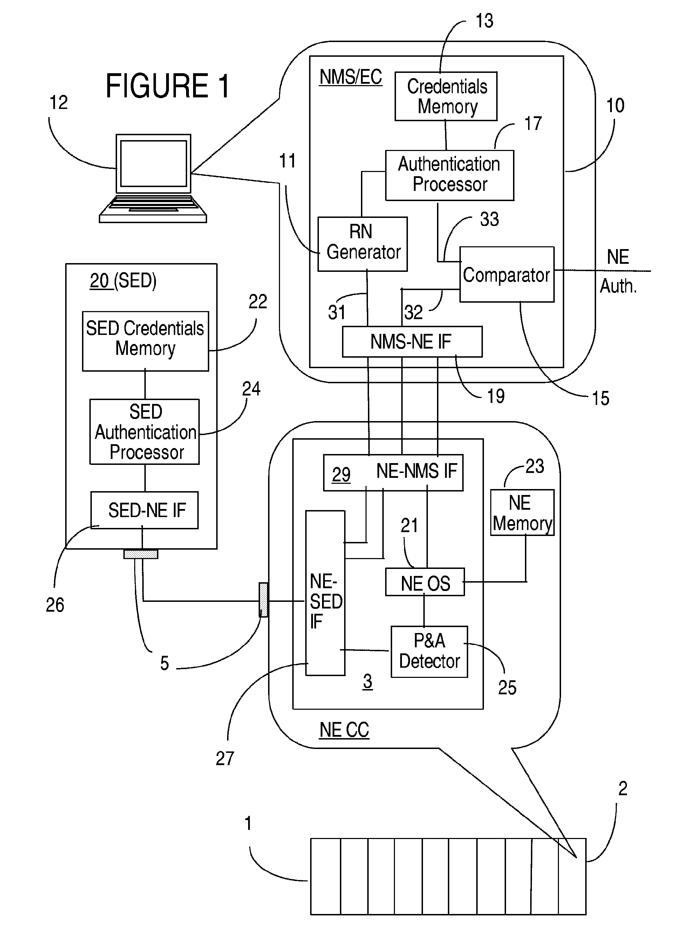

A brief description of the multi-level and multi-factor security credentials management (SCM) system for network element authentication is provided next in connection with the block diagram of Figure 1. Further details about SCM system are provided in the above referenced co-pending patent application SN 10/846,542. The SCM system is implemented using an external secured execution device (SED) **20,** which is provided with a connector **5** for attachment/reattachment to the control card **2** of a N E **1.** SED **20** uses preferably smart card technology. NE**1** is generically shown as a shelf of equipment with a plurality of cards, including control card **2.** However, it is well-known that a NE may use more shelves in a cabinet of equipment; a one -shelf NE is illustrated by way of example.

Figure 1 also illustrates the NE control entity **12,** be it a network management system (NMS) or an element management system (EMS), an operating system support (OSS), etc. It is to be noted that only the units relevant to the NE authentication, referred to as NE authentication controller **10,** of the NE control entity **12** are shown. Figure 1 also illustrates only the units of the NE **2** that are involved in exchange of data between SED **20** and NE authentication controller **10,** referred to as N E security controller **3.**

The above-referenced co-pending US Patent Application describes various implementations of SED **20.** In principle, SED **20** has a credentials memory **22,** an authentication processor **24** and a SED-NE interface **26.**
Memory **22** could be used to store all security parameters that have to be kept secret. SED memory **22** stores the credentials input off-line for various entities that have access privileges to the NE **1.** SED initialization and configuration can be done by an end user in a card holder environment with minimal hardware/software set up; the credentials provide a user specific level of security. It is apparent that in the arrangement shown in Figure 1, data stored in memory **22** cannot be accessed logically or physically outside SED **20;** it can only be accessed and manipulated over an authentication processor **24.**

Authentication processor **24** could be a generic processor that enables controlled and secure access to the sensitive and confidential information in memory **22.** Authenti cation processor **24** is involved in requesting access to a specified activity in the network, and in responding to a challenge received form the authentication unit **10,** with a view to authenticate the user/NE right to the requested access to perform that activity. Since the credentials are kept in a distinct, protected environment, isolation of processes run by the NE operating system **21** and the authentication processes run by the authentication processor **24** of SED **20** can be maintained. Also, this arrangement enables easy updates of the credentials and hardware -independent updates of the security-related functionality.

Different security aspects relating to the NE could be treated separately using multiple SEDs, each addressing a specific aspect; the multiple instances could improve reliability of the security program. The different instances might also be configured for use by more than one entity. In the event of multiple or several instances of SEDs, synchronization in real time may be needed.

The security controller (SC) **3** is mainly involved in establishing communication channels between SED **20** and NE authentication controller **10.** NE-SED interface **27** enables communication with SED **20** over the corresponding SED-NE interface **26,** and NE-NMS interface **29** enables communication with the NE authentication unit **10** over a corresponding NMS-NE interface **19.** In addition, the SC **3** ensures that NE **1** detects when the SED is connected and running, as generically shown by presence and activity detector **25.** Use of presence and activity detector **25** effectively minimizes the window of exposure of sensitive and critical information maintained on SED **20.** Figure 1 also shows the control card memory **23,** which is used in a well know manner to store data used by the NE operating system **21** for operation of the NE **1.** It is readily apparent that since the credentials are kept separately (memory **22** on SED **20)** from the data stored in memory **23,** a malicious attack on **memory 23** will not enable access to the credentials..

In the exemplary embodiment of Figure 1, the NE authentication controller **10** includes a challenge generator **11,** a credentials memory **13,** a comparator **15** and an authentication processor **17.** Challenge generator **11** challenges the SED to identify the NE/user as a rightful user of the privileges accorded to that user in the network. For example, the challenge could be a random number generator that creates a random number **31** and sends it to the SED over the NMS-NE interface **19,** NE-NMS interface **29** and respectively interfaces **27** and **26.** Credentials memory **13** stores credentials information of the same type as that in the SED memory **22;** evidently credentials memory **13** keeps credentials information for some or all NEs under the control of the NMS/EMS **12.** Authentication processor **17** receives the same challenge (random number) that is sent to the SED and the credentials for the entity specified in the request and calculates locally the response to challenge. Comparator **15** compares the SED response **32** with the expected response **33** calculated locally to provide a NE authentication notifier when the two signals coincide. The notifier indicates if the NE is a legitimate NE/user and enables the NE/user having the credentials stored in memory **22** to proceed with the activity of interest from NE **1.**

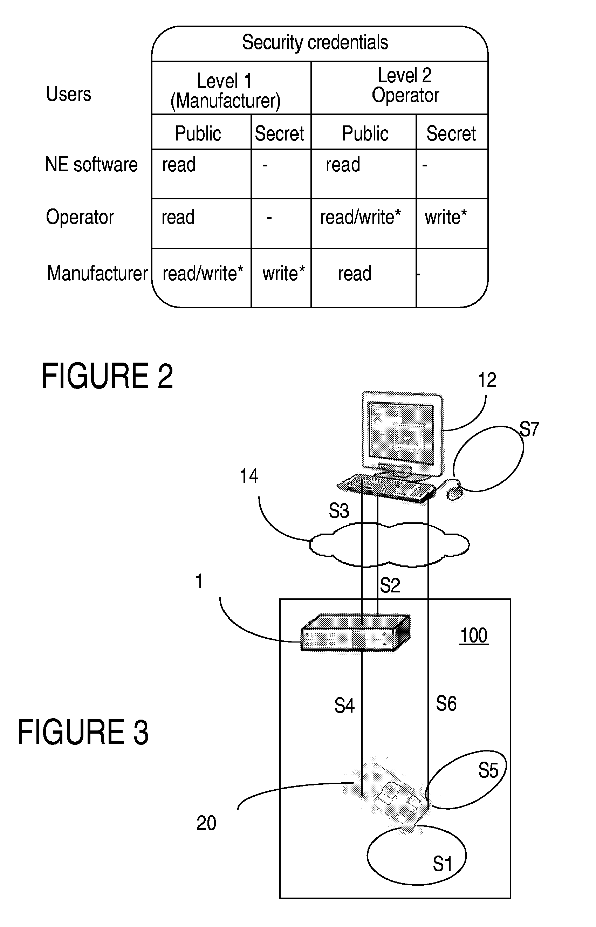

According to the invention, the security credentials are maintained in credentials memory **13** are configured on layers and factors, as shown in the example provided in Figure 2. The credentials are introduced off-line by the respective entity (e.g. the manufacturer at the installation time, the operator at the configuration time and the users upon registration). Each layer corresponds to an authorized user, and each factor indicates a privilege for the respective level. The number of layers and of factors is configurable, and each level is activated by a respective password or a PIN code for the respective SED.

Figure 2 provides an example of a two-level, two-factor security credential management configuration. It is to be understood that the invention is not limited to two-levels and two factors. In this example, Level 1 defines the manufacturing configuration, providing the privileges accorded to the manufacturing entity. Level 2 defines the operation configuration providing the privileges accorded to the network operator. Level 1 is activated with the presentation of a Level 1 password and Level 2 is activated with the presentation of a level 2 passwords.

The security credentials are classified according to two factors in this example, namely Public and Secret factors. For example, Public manufacturer security credentials may be the manufacturer identity, the NE serial number, the network card configuration, etc, and private manufacturer security credentials may be a Level 1 PIN code and a software license key. Public operator security credentials may be the operator name, the IP address, the CPSS address (control packet switching system), etc, and Private operator security credentials may be a Level 2 PIN code, a secret key, BGP-MD5 (message digest algorithm).

The SED controls the operations available for each category, based on the set of credentials allocated at each level for each category. Thus, the NE software privileges at both Level 1 and Level 2 are read only from the public category. The operator has read privileges to for the Level 1, public category, read/write privileges for the Level 2 public category and write privileges for the Level 2 secret category. Conversely, the manufacturer has read privileges to for the Level 2, public category, read/write privileges for the Level 1 public category and write privileges for the Level 1 secret category. Write privileges always require presentation of a PIN code associated with the corresponding level.

Using the proposed multi-level and multi-factor security credentials management system described above, a scenario of network element authentication is presented in Figure 3. Figure 3 illustrates a node **100** enabled with the system of the invention. The node includes a network element **1** with the respective SED (secured execution device) **20** that interfaces with the control card (not shown) embedded on the NE. It is assumed that the respective NE **1** is recognized by the NE control entity **12,** i.e. entity **12** has identity and operational parameters of NE **1** and table **13** includes the security credentials for all entities that have privileges to use/operate the NEs controlled by entity **12.** In Figure 3, NE **1** is connected to NMS **12** over a network denoted with **50.**

The authentication of the NE **1** in the network **14** begins with the SED connecting to the NE 1, and requesting access to an operation to be performed by NE **1,** as shown in step **S1.** The request contains information about the identity of the requestor (password, user ID) and the type of operations to be performed. At this time, the NE1 detects the presence and activity of the SED, establishes the connectivity between the NE control entity **12** and SED **20,** and informs the NE control entity of the SED access request, as shown in step **S2.** Next, the NE control entity **12** generates and sends the challenge to the SED over the channels established by NE **1,** as shown by stepsS3 and **S4.** To reiterate, the NE is not involved in this activity, but for transmitting the challenge on connection **31** received from NE control entity **12** to SED **20.**

SED **20** receives and processes the challenge; for example authentication process **24** may execute a pre-established set of operations to the respective random number and generate the SED response **32.** This is illustrated in step **S5.** The SED response is transmitted next to the NE control entity over NE 1 (without the NE involvement), as shown in step **S6.** Finally, comparator **15** of the NE control entity compares the SED response **32** with the expected response 33 and provided the NE authentication notifier, if the two match. Now, the NE/user is allowed to go ahead with the request.

## Claims

1. A security credentials management system for verifying authenticity of a network element (NE) in a communication network, comprising:
a NE authentication unit for generating a challenge to said network element and verifying if a response received from said NE to said challenge conforms with an expected response;
an autonomous secured execution device (SED) for generating said response to said challenge based on security credentials for a specified user, upon temporary connection with said NE; and
a NE security controller for enabling communication between said NE authentication unit and said SED.

2. The system of claim 1, wherein said NE authentication unit comprises:
a credentials memory for maintaining a table with multi-level multi-factor security credentials indicating the privileges for a plurality of authorized users of said communication network;
a challenge generator for creating said challenge and transmitting same to said SED;
an authentication processor for locally processing the security credentials for said specified user and said challenge and obtaining said expected response; and
a comparator for comparing said expected response with the response to said challenge with a view to verify the identity of said NE.

3. The system of claim 1, wherein said NE authentication unit comprises an interface with said NE for transmitting said challenge to said SED and receiving said response to said challenge from said SED.

4. The system of claim 1, wherein said SED comprises:
a SED credentials memory for storing the security credentials for said specified user; and
a SED authentication processor for receiving said challenge and calculating said response based on the security credentials for said specified user.

5. The system of claim 1, wherein said SED comprises an interface with said NE for receiving said challenge from said NE authentication unit and transmitting to said NE authentication unit said response to said challenge.

6. The system of claim 1, wherein said NE security controller comprises a presence and activity detector for detecting when said SED is present and active at said NE.

7. The system of claim 2, wherein said security credentials are organized in said table on credentials levels, each level including a one or more authorized users.

8. The system of claim 7, wherein a first credential level is reserved for a network manufacturer and a second credential level is reserved for a network operator.

9. The system of claim 8 wherein said security credentials at each said credentials level are organized based on factors categories.

10. The system of claim 9, wherein said factor categories include a public category and a secret category.

11. The system of claim 9, wherein said security credentials in each said category are organized according to a privilege associated with said respective authorized user.

12. The system of claim 11, wherein said privileges include permissions to perform a read, write and read/write operation within said network from said NE.

13. The system of claim 11, wherein said SED credentials memory includes the security credentials for said authorized user.

14. The system of claim 13, wherein said security credentials for said authorized user includes a specific credentials level, factor category and privilege.

15. A method for managing security credentials of the users of a communication network, for verifying authenticity of a network element (NE) in a communication network comprising:
a) providing a secured execution device (SED) with security credentials of a specified entity and re-movably connecting said SED to said NE for login a request to perform a specified operation from sad NE;
b) at said NE, detecting the presence of said SED and informing a NE control entity of said request;
c) at said NE control entity, generating a challenge to said SED and transmitting said challenge to said SED;
d) processing said challenge at said SED, and transmitting a SED response to said NE control entity;
e) at said NE control entity, verifying if said response conforms with an expected response calculated locally at said NE control entity; and
f) authorizing said entity to perform said operation from said NE if said response coincides with said expected response.

16. The method of claim 15, wherein step e) comprises:
maintaining at said NE control entity a table with multi-level multi-factor security credentials indicating the privileges of a plurality of entities authorized to perform specified operations in said communication network;
generating said challenge and locally processing the security credentials for said specified entity and said challenge and obtaining said expected response; and
comparing said expected response with said SED response with a view to verify the identity of said specified entity.

17. The method of claim 16, wherein said security credentials are organized at said NE control entity in table including credentials levels, each level specifying an entity authorized to perform a specified operation.

18. The method of claim 17, wherein a first credential level is reserved for a network manufacturer and a second credential level is reserved for a network operator.

19. The method of claim 17, wherein said security credentials at each said credentials level are organized based on factors categories.

20. The system of claim 19, wherein said factor categories include a public category and a secret category.

21. The system of claim 19, wherein said security credentials in each said category are organized according to a privilege associated with said respective specified entity.

22. The system of claim 21, wherein said privileges include permissions to perform a read, write and read/write operation within said network from said NE.

23. The system of claim 21, wherein said SED credentials memory includes the security credentials for said specified entity.

24. The method of claim 23, wherein said security credentials for said authorized user includes a specific credentials level, factor category and privilege.
